(19) Europäisches Patentamt
European Patent Office
Office européen des brevets

(11) **EP 4 030 538 A1**

(12) **EUROPEAN PATENT APPLICATION**
published in accordance with Art. 153(4) EPC

(43) Date of publication:
**20.07.2022 Bulletin 2022/29**

(21) Application number: **21837428.8**

(22) Date of filing: **07.07.2021**

(51) International Patent Classification (IPC):
**H01M 50/153** (2021.01)    **H01M 50/147** (2021.01)
**H01M 50/543** (2021.01)    **H01M 50/172** (2021.01)
**H01M 50/528** (2021.01)    **H01M 10/04** (2006.01)
**H01M 50/581** (2021.01)

(52) Cooperative Patent Classification (CPC):
**H01M 10/04; H01M 50/147; H01M 50/153;**
**H01M 50/172; H01M 50/528; H01M 50/543;**
**H01M 50/581**

(86) International application number:
**PCT/KR2021/008621**

(87) International publication number:
**WO 2022/010249 (13.01.2022 Gazette 2022/02)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **10.07.2020   KR 20200085350**
**05.07.2021   KR 20210088082**

(71) Applicant: **Samsung SDI Co., Ltd.**
**Yongin-si, Gyeonggi-do 17084 (KR)**

(72) Inventors:
• **KO, Heejung**
  **Yongin-si, Gyeonggi-do 17084 (KR)**
• **KIM, Kijung**
  **Yongin-si, Gyeonggi-do 17084 (KR)**
• **PARK, Yongjin**
  **Yongin-si, Gyeonggi-do 17084 (KR)**
• **WOO, Byongchul**
  **Yongin-si, Gyeonggi-do 17084 (KR)**
• **LEE, Jong-Ha**
  **Yongin-si, Gyeonggi-do 17084 (KR)**

(74) Representative: **Gulde & Partner**
**Patent- und Rechtsanwaltskanzlei mbB**
**Wallstraße 58/59**
**10179 Berlin (DE)**

(54) **RECHARGEABLE BATTERY**

(57)    A rechargeable battery includes: an electrode assembly including a first electrode, a second electrode, and a separator between the first electrode and the second electrode; a case connected to the first electrode to house the electrode assembly and including an opening to expose the electrode assembly; a cap plate coupled with the case to cover an outer region of the opening and including a through-hole to expose a center region of the opening; and a terminal plate connected to the second electrode to be insulated from and bonded to the cap plate, and including a flange part covering the through-hole and a protruded part penetrating the through-hole from the flange part.

FIG. 1

EP 4 030 538 A1

**Description**

**[Technical Field]**

The present disclosure is a rechargeable battery.

**[Background Art]**

In general, a rechargeable battery is a battery that may be repeatedly charged and discharged.
In recent years, as a demand for wearable devices, such as headphones, earphones, smartwatches, and body-attached medical devices using wireless communication such as Bluetooth, increases, a need for ultra-small rechargeable batteries installed in the wearable devices is increasing.
Such an ultra-small rechargeable battery includes an electrode assembly including two electrodes, a case accommodating the electrode assembly and connected to one electrode of the electrode assembly, and a terminal plate sealing the electrode assembly with the case and connected to the other electrode of the electrode assembly.

**[Disclosure]**

An exemplary embodiment provides a rechargeable battery including a terminal plate which tightly seals an electrode assembly with a case and is firmly connected to an electrode of the electrode assembly simultaneously.
One aspect provides a rechargeable battery, including: an electrode assembly including a first electrode, a second electrode, and a separator between the first electrode and the second electrode; a case connected to the first electrode to house the electrode assembly and including an opening to expose the electrode assembly; a cap plate coupled with the case to cover an outer region of the opening and including a through-hole to expose a center region of the opening; and a terminal plate connected to the second electrode to be insulated from and bonded to the cap plate, and including a flange part covering the through-hole and a protruded part penetrating the through-hole from the flange part, in which a ratio of a diameter of the protruded part to a diameter of the flange part is 2/25 to 3/5.
The rechargeable battery may further include a thermal fusion layer between the cap plate and the flange part and insulatedly bonding the cap plate and the flange part.
The thermal fusion layer may be melted at a predetermined temperature.
The flange part may be arranged on the cap plate, and the protruded part may be connected to the second electrode through the through-hole from the flange part.
The electrode assembly may further include: a first electrode tab extending from the first electrode and welded to the case; and a second electrode tab extending from the second electrode and welded to the protruded part of the terminal plate.
The flange part may have a wider area than the protruded part.
The flange part may have a thinner thickness than the protruded part.
The flange part and the protruded part may be integrally formed.
The case and the cap plate may have a same polarity as the first electrode, and the terminal plate may have a same polarity as the second electrode.
The diameter of the flange part may be smaller than a diameter of the case.
The ratio of the diameter of the protruded part to the diameter of the flange part may be 1/10 to 3/5.
The ratio of the diameter of the protruded part to the diameter of the flange part may be 1/10 to 1/2.
The ratio of the diameter of the protruded part to the diameter of the flange part may be 1/10 to 1/3.
The rechargeable battery may include a coin-type cell or a button-type cell.
A ratio of a height to a diameter of the coin-type cell or the button-type cell (height/diameter) may be 1 or less.
Another aspect provides a rechargeable battery including: an electrode assembly including a first electrode, a second electrode, and a separator between the first electrode and the second electrode; a case connected to the first electrode to house the electrode assembly and including an opening to expose the electrode assembly; a cap plate coupled with the case to cover an outer region of the opening and including a through-hole to expose a center region of the opening; and a terminal plate connected to the second electrode to be insulated from and bonded to the cap plate, and including a flange part covering the through-hole and a protruded part penetrating the through-hole from the flange part, in which a ratio of a diameter of the protruded part to a diameter of the flange part is 2/25 or more.
The ratio of the diameter of the protruded part to the diameter of the flange part may be 3/5 or less.
The ratio of the diameter of the protruded part to the diameter of the flange part may be 1/2 or less.
The ratio of the diameter of the protruded part to the diameter of the flange part may be 1/3 or less.
According to the embodiments, there is provided the rechargeable battery including the terminal plate sealing the electrode assembly firmly with the case and simultaneously firmly connected to an electrode of the electrode assembly.

**[Description of the Drawings]**

FIG. 1 is a perspective view of a rechargeable battery according to an embodiment.
FIG. 2 is a cross-sectional view taken along the line II-II of FIG. 1.
FIG. 3 is a first table showing experimental examples illustrating an effect of a rechargeable battery according to an embodiment.
FIG. 4 is a second table showing experimental examples illustrating an effect of a rechargeable battery according to an embodiment.

**[Mode for Invention]**

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

In addition, unless explicitly described to the contrary, the word "comprise", and variations such as "comprises" or "comprising", will be understood to imply the inclusion of stated elements but not the exclusion of any other elements.

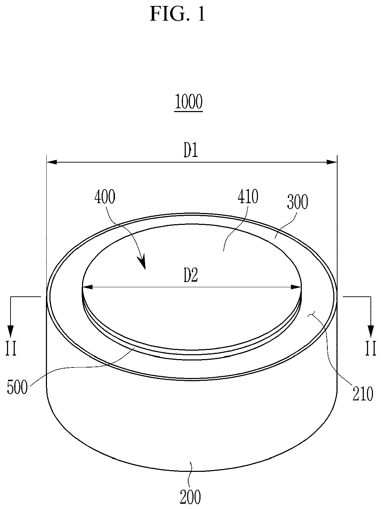

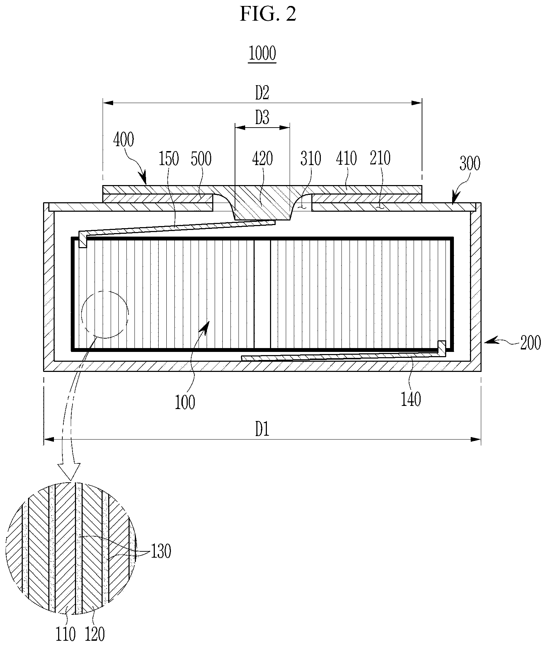

Hereinafter, a rechargeable battery according to an embodiment is described with reference to FIG. 1 and FIG. 2.

The rechargeable battery according to one embodiment is an ultra-small rechargeable battery and may be a coin-type cell or a button-type cell, but is not limited thereto, and, in another embodiment, may be a cylindrical or pin-type cell.

Here, the coin-type cell or the button-type cell is a thin coin-type or button-type cell, and may refer to a cell having a ratio of a height to a diameter of 1 or less, however, is not limited thereto. In an embodiment, the coin-type cell or the button-type cell is mainly cylindrical, and a horizontal cross-section is circular, but the present invention is not limited thereto, and, in other embodiments, the horizontal cross-section may be oval or polygonal. At this time, the diameter may refer to a maximum distance based on the horizontal direction of the battery, and the height may refer to the maximum distance (a distance from the flat bottom surface to the flat top surface) based on the vertical direction of the battery.

FIG. 1 is a perspective view of a rechargeable battery according to an embodiment. FIG. 2 is a cross-sectional view taken along the line II-II of FIG. 1.

Referring to FIG. 1 and FIG. 2, a rechargeable battery 1000 according to an embodiment includes an electrode assembly 100, a case 200, a cap plate 300, a terminal plate 400, and a thermal fusion layer 500.

The electrode assembly 100 is housed in the case 200. A lower part of the electrode assembly 100 faces a lower part of the case 200, and an upper part of the electrode assembly 100 faces the cap plate 300 and the terminal plate 400 covering an opening 210 of the case 200. In an embodiment, the upper and lower parts of the electrode assembly 100 may each have a planar shape and may be parallel to each other, but are not limited thereto.

The electrode assembly 100 includes a first electrode 110, a second electrode 120, a separator 130, a first electrode tab 140, and a second electrode tab 150.

The first electrode 110 and the second electrode 120 are separated from each other, and the separator 130 including an insulating material is disposed between the first electrode 110 and the second electrode 120. The first electrode 110 may be an anode and the second electrode 120 may be a cathode, but the present disclosure is not limited thereto, and the first electrode 110 may be a cathode and the second electrode 120 may be an anode.

The first electrode 110 has a band shape extending in a direction, and includes an anode coated region of an area where an anode active material layer is coated to a current collector of a metal foil (for example, a Cu foil), and an anode uncoated region of an area where the active material is not coated. The anode uncoated region may be disposed at an end in the extension direction of the first electrode 110.

The second electrode 120 has a band shape and is spaced apart from the first electrode 110 with the separator 130 interposed therebetween and extends in a direction, and includes a cathode coated region of an area where a cathode active material layer is coated to a current collector of a metal foil (for example, an Al foil), and a cathode uncoated region of an area where the active material is not coated. The cathode uncoated region may be disposed at an end in the extending direction of the second electrode 120.

The separator 130 extends in a direction between the first electrode 110 and the second electrode 120 to prevent a short circuit between the first electrode 110 and the second electrode 120.

The first electrode 110, the separator 130, and the second electrode 120 are sequentially stacked and wound in a jelly roll shape, but are not limited thereto, and may be formed in any of various known shapes. Each of the first electrode 110, the second electrode 120, and the separator 130 may include any of various known materials.

The first electrode tab 140 extends from the first electrode 110 of the electrode assembly 100 to the case 200.

The first electrode tab 140 is combined with the lower part of the case 200 to connect the first electrode 110 and the case 200. The first electrode tab 140 is in contact with the first electrode 110 and the case 200. the first electrode tab 140 is welded to the lower part of the case 200, but is not limited thereto. By the first electrode tab 140, the case 200 has a same polarity as the first electrode 110.

The second electrode tab 150 extends from the second electrode 120 of the electrode assembly 100 to the terminal plate 400. The second electrode tab 150 is combined with the protruded part 420 of the terminal plate 400 to connect the second electrode 120 and the terminal plate 400. The second electrode tab 150 is in contact with the second electrode 120 and the terminal plate 400. The second electrode tab 150 is welded to the surface of the protruded part 420 of the terminal plate 400, but is not limited thereto. The terminal plate 400 has a same polarity as the second electrode 120 by the second electrode tab 150.

In the meantime, a center pin penetrating the center of the electrode assembly 100 in a vertical direction may be disposed at the center portion of the electrode assembly 100, and the center pin may support the first electrode tab 140 and the second electrode tab 150.

However, since the center pin may be removed in the assembling process of the rechargeable battery, as illustrated in FIG. 2, the center pin may not be located at the center of the electrode assembly 100.

Each of the first electrode tap 140 and the second electrode tap 150 protrudes from an outer peripheral end of the electrode assembly 100 in the form of the jelly roll, but is not limited thereto, and may protrude from the center of the electrode assembly 100 in the form of the jelly roll or one portion between the center and an outer peripheral end of the electrode assembly 100 in the form of the jelly roll.

The case 200 is connected to the first electrode 110 of the electrode assembly 100 and houses the electrode assembly 100. The case 200 includes the opening 210 that exposes the upper part of the electrode assembly 100. The lower part of the case 200 is welded to the first electrode tap 140 and is connected to the first electrode 110 of the electrode assembly 100 by the first electrode tab 140, so that the case 200 has the same polarity as the first electrode 110. The case 200 is a cylinder-shaped can that accommodates the jelly roll-shaped electrode assembly 100, but is not limited thereto and may have any of various known shapes. The case 200 may accommodate any of various known electrolyte solutions along with the electrode assembly 100. An outer surface of the case 200 may be the first electrode terminal of the rechargeable battery 1000, but is not limited thereto. In this case, the upper surface of the flange part 410, which is the outer surface of the terminal plate 400, may be the second electrode terminal of the rechargeable battery 1000, but is not limited thereto. In the meantime, a plating layer may be coated on the outer surface of the case 200, but the present disclosure is not limited thereto, and various known coating layers may be coated on the outer surface of the case 200.

The opening 210 of the case 200 is covered by the cap plate 300 and the terminal plate 400.

The cap plate 300 is combined with the case 200 to cover the outer region of the opening 210. The cap plate 300 includes a through-hole 310 that exposes the center region of the opening 210. The cap plate 300 is directly coupled to the side wall of the case 200, which forms the opening 210 of the case 200, by a welding process to cover the outer region of opening 210. The cap plate 300 has a ring shape by the through-hole 310 formed in the center, but is not limited thereto. The cap plate 300 is combined with the case 200 and has the same polarity as the first electrode 110. The cap plate 300 includes stainless steel, but is not limited thereto, and may include a metal, such as any of aluminum, nickel, and copper. The outer surface of the cap plate 300 may be the first electrode terminal of the rechargeable battery 1000, but is not limited thereto. An insulating member (not illustrated), such as variously known insulating layers, which is in contact with the configuration, such as the adjacent second electrode tap 150, having a different polarity to prevent short circuit, may be positioned on the lower surface of the cap plate 300.

In the meantime, a plating layer may be coated on the outer surface of the cap plate 300, but is not limited thereto, and any of various known coating layers may be coated on the outer surface of the cap plate 300.

The terminal plate 400 is connected to the second electrode 120 to be insulated from and bonded to the cap plate 300. The terminal plate 400 covers the through-hole 310 of the cap plate 300. The terminal plate 400 is disposed on the cap plate 300. The terminal plate 400 covers the center region of the opening 210 of the case 200 exposed by the through-hole 310 of the cap plate 300. Since the terminal plate 400 covers the center region of the opening 210 and the cap plate 300 covers the outer region of the opening 210, the opening 210 of the case 200 is completely covered by the terminal plate 400 and the cap plate 300. The terminal plate 400 tightly seals the electrode assembly 100 along with the case 200, the cap plate 300, and the thermal fusion layer 500. The terminal plate 400 is coupled to the second electrode tab 150 of the electrode assembly 100 to be connected to the second electrode 120 of the electrode assembly 100. The terminal plate 400 has the same polarity as the second electrode 120.

The terminal plate 400 includes a flange part 410 and a protruded part 420.

The flange part 410 is disposed on the cap plate 300 and overlaps the cap plate 300 to cover the through-hole 310. The flange part 410 has a larger area than the protruded part 420. The flange part 410 may have a larger diameter than the protruded part 420. The upper surface of the flange part 410 is smaller than a first diameter D1, which is the exterior diameter of the case 200, and has a second diameter D2, which is larger than a third diameter D3, which is an exterior diameter of the lower surface of the protruded part 420. The flange part 410 has a thinner thickness than the protruded part 420, but is not limited thereto. The lower surface of the flange part 410 is in contact with the thermal fusion layer 500, and the flange part 410 is insulatedly bonded to the cap plate 300 by the thermal fusion layer 500. An upper surface of the flange part 410 may be the second electrode terminal of the rechargeable battery 1000.

The protruded part 420 is protruded from the flange part 410 and penetrates the through-hole 310. The protruded part 420 is connected to the second electrode 120 through the through-hole 310 from the flange part 410. The lower surface of the protruded part 420 is bonded to the second electrode tab 150. The lower surface of the protruded part 420 may be welded to the second electrode tab 150, but is not limited thereto. As the protruded part 420 is combined with the second electrode tab 150, the protruded part 420 and the flange part 410 of the terminal plate 400 have the same polarity as the second electrode 120. The lower surface of the protruded part 420 combined with the second electrode tab 150 may have a smaller diameter than the upper surface of the flange part 410, which may be an electrode terminal. The protruded part 420 is spaced apart from the cap plate 300 by a set distance in order to prevent a short circuit with the cap plate 300. For example, the protruded part 420 has a smaller size (for example, a diameter) than that of the through-hole 310 so that the edge of the protruded part 420 is not in contact with the cap plate 300. The lower surface of the protruded part 420 has a third diameter D3 that is smaller than the first diameter D1 that is the exterior diameter of the case 200 and the second diameter D2 that is the exterior diameter of the upper surface of the flange part 410. The third diameter D3 of the lower surface of the protruded part 420/the second diameter D2 of the upper surface of the flange part 410 is 2/25 to 3/5. That is, the third diameter D3 of the protruded part 420/the second diameter D2 of the flange part 410 is 2/25 to 3/5.

For example, as illustrated in FIG. 2, the lower surface of the protruded part 420 may further protrude in the lower direction compared to the lower surface of the cap plate 300, and the lower surface of the protruded part 420 may be positioned at a side lower than the lower surface of the cap plate 300.

For example, the lower surface of the protruded part 420 may be positioned on the same line or the same plane as that of the lower surface of the cap plate 300.

For another example, the lower surface of the protruded part 420 may less protrude in the upper direction compared to the lower surface of the cap plate 300, and the lower surface of the protruded part 420 may be positioned at a side above the lower surface of the cap plate 300.

A welding area of the second electrode tab 150 welded to the protruded part 420 is determined according to the ratio of the third diameter D3 of the protruded part 420 to the second diameter D2 of the flange part 410 of the terminal plate 400. Since the ratio of the third diameter D3 of the protruded part 420 to the second diameter D2 of the flange part 410 is 2/25 to 3/5, the second electrode tab 150 is firmly coupled to the protruded part 420.

The protruded part 420 and the flange part 410 are integrally formed, but are not limited thereto, and different materials may be combined to form the terminal plate 400

A plating layer may be coated on the outer surface of the terminal plate 400, but is not limited thereto, and any of various known coating layers may be coated on the outer surface of the terminal plate 400.

The thermal fusion layer 500 is disposed between the cap plate 300 and the flange part 410 of the terminal plate 400 and is insulatedly bonded between the cap plate 300 and the flange part 410 of the terminal plate 400. The thermal fusion layer 500 contains an insulating material and insulates between the cap plate 300 and the terminal plate 400. The thermal fusion layer 500 is thermally fused between the cap plate 300 and the flange part 410 of the terminal plate 400 by using heat or a laser beam. The thermal fusion layer 500 may include any of various known materials for insulating and bonding between the cap plate 300 and the terminal plate 400. By bonding the thermal fusion layer 500 between the cap plate 300 and the terminal plate 400, the opening 210 of the case 200 to which the electrode assembly 100 is housed is completely sealed by the cap plate 300, the terminal plate 400, and the thermal fusion layer 500.

The thermal fusion layer 500 may be positioned between the flange part 410 of the terminal plate 400 and the cap plate 300, and the thermal fusion layer 500 may have a minimum fusion length and a maximum fusion length D4 in the direction of the second diameter D2 of the flange part 410.

Herein, the minimum fusion length may mean a minimum length (in a direction of a radius) in which the terminal plate 400 overlaps the cap plate 300 in the vertical direction from the center of the terminal plate 400 to the border of the terminal plate 400. The minimum fusion length in which the thermal fusion layer 500 is positioned may satisfy Equation 1 below, but is not limited thereto.

[Equation1]

Minimum fusion length=(Second diameter of the flange part - (second diameter of the

flange part * 0.8))/2

Further, the maximum fusion length D4 may mean a maximum length (in the direction of the radius) in which the terminal plate 400 overlaps the cap plate 300 in the vertical direction from the center of the terminal plate 400 to the border of the terminal plate 400.

The maximum fusion length D4 in which the thermal fusion layer 500 is positioned may satisfy Equation 2 below, but is not limited thereto.

[Equation2]

$$\text{Maximum fusion length} = (\text{Second diameter of the flange part} - (\text{third diameter of the protruded part} * 1.1))/2$$

The thermal fusion layer 500 is cured by heat, but may be melted at a predetermined temperature. The predetermined temperature at which the thermal fusion layer 500 melts may be a temperature that exceeds a temperature of heat for curing the thermal fusion layer 500, but is not limited thereto.

For example, the thermal fusion layer 500 may include a thermosetting resin and a thermoplastic resin. The thermosetting resin and the thermoplastic resin of the thermal fusion layer 500 may be laminated in a plurality of layers, but are not limited thereto. The thermosetting resin of the thermal fusion layer 500 is cured by heat, and may include any of various known thermosetting resins, such as any of a phenol resin, a urea resin, a melamine resin, an epoxy resin, and a polyester resin. The thermoplastic resin of the thermal fusion layer 500 includes a polypropylene resin that melts at a predetermined temperature, but is not limited thereto, and may include any of various known thermoplastic resins, such as any of polystyrene, polyethylene, and a polyvinyl chloride resin.

According to the ratio of the third diameter D3 of the protruded part 420 to the second diameter D2 of the flange part 410 of the terminal plate 400, the bonding area of the thermal fusion layer 500 bonding the flange part 410 and the cap plate 300 and the maximum fusion length D4 in which the thermal fusion layer 500 is located are determined. The ratio of the third diameter D3 of the protruded part 420 to the second diameter D2 of the flange part 410 is 2/25 to 3/5, such that the second electrode tap 150 is firmly coupled to the protruded part 410 and simultaneously, the flange part 410 and the cap plate 300 are firmly bonded by the thermal fusion layer 500.

For example, the ratio of the third diameter D3 of the protruded part 420 to the second diameter D2 of the flange part 410 is 1/10 to 3/5. The ratio of the third diameter D3 of the protruded part 420 to the second diameter D2 of the flange part 410 is 1/10 to 3/5, such that the second electrode tap 150 may be firmly coupled to the protruded part 410 and simultaneously, the flange part 410 and the cap plate 300 may be firmly bonded by the thermal fusion layer 500. In the case where the ratio of the third diameter D3 of the protruded part 420 to the second diameter D2 of the flange part 410 is 1/10 to 3/5, the second electrode tap 150 may be more firmly coupled to the protruded part 410 and simultaneously, the flange part 410 and the cap plate 300 may be more firmly bonded by the thermal fusion layer 500, compared to the case where the ratio of the third diameter D3 of the protruded part 420 to the second diameter D2 of the flange part 410 is 2/25 to 3/5.

For another example, the ratio of the third diameter D3 of the protruded part 420 to the second diameter D2 of the flange part 410 may be 1/10 to 1/2. The ratio of the third diameter D3 of the protruded part 420 to the second diameter D2 of the flange part 410 is 1/10 to 1/2, such that the second electrode tap 150 may be firmly coupled to the protruded part 410 and simultaneously, the flange part 410 and the cap plate 300 may be firmly bonded by the thermal fusion layer 500. In the case where the ratio of the third diameter D3 of the protruded part 420 to the second diameter D2 of the flange part 410 is 1/10 to 1/2, the second electrode tap 150 may be more firmly coupled to the protruded part 410 and simultaneously, the flange part 410 and the cap plate 300 may be more firmly bonded by the thermal fusion layer 500, compared to the case where the ratio of the third diameter D3 of the protruded part 420 to the second diameter D2 of the flange part 410 is 1/10 to 1/2.

For another example, the ratio of the third diameter D3 of the protruded part 420 to the second diameter D2 of the flange part 410 may be 1/10 to 1/3. The ratio of the third diameter D3 of the protruded part 420 to the second diameter D2 of the flange part 410 is 1/10 to 1/3, such that the second electrode tap 150 may be firmly coupled to the protruded part 410 and simultaneously, the flange part 410 and the cap plate 300 may be firmly bonded by the thermal fusion layer 500. In the case where the ratio of the third diameter D3 of the protruded part 420 to the second diameter D2 of the flange part 410 is 1/10 to 1/3, the second electrode tap 150 may be more firmly coupled to the protruded part 410 and simultaneously, the flange part 410 and the cap plate 300 may be more firmly bonded by the thermal fusion layer 500, compared to the case where the ratio of the third diameter D3 of the protruded part 420 to the second diameter D2 of the flange part 410 is 1/10 to 3/5.

As described above, in the rechargeable battery 1000 according to the embodiment, the welding area of the second electrode tab 150 welded to the protruded part 420, the bonding area of the thermal fusion layer 500 bonding the flange part 410 and the cap plate 300, and the maximum fusion length D4 in which the thermal fusion layer 500 is located are determined according to the ratio of the third diameter D3 of the protruded part 420 to the second diameter D2 of the flange part 410 of the terminal plate 400, and, as the ratio of the third diameter D3 of the protruded part 420 to the second diameter D2 of the flange part 410 is 2/25 to 3/5, the second electrode tab 150 is firmly coupled to the protruded part 420, and simultaneously the flange part 410 and the cap plate 300 are firmly bonded by the thermal fusion layer 500.

That is, since the third diameter D3 of the protruded part 420/the second diameter D2 of the flange part 410 is 2/25 to 3/5, the rechargeable battery 1000 including the terminal plate 400 firmly sealing the electrode assembly 100 along with the case 200, the cap plate 300, and the thermal fusion layer 500 and simultaneously firmly connected to the second electrode tab 150 of the electrode assembly 100 is provided.

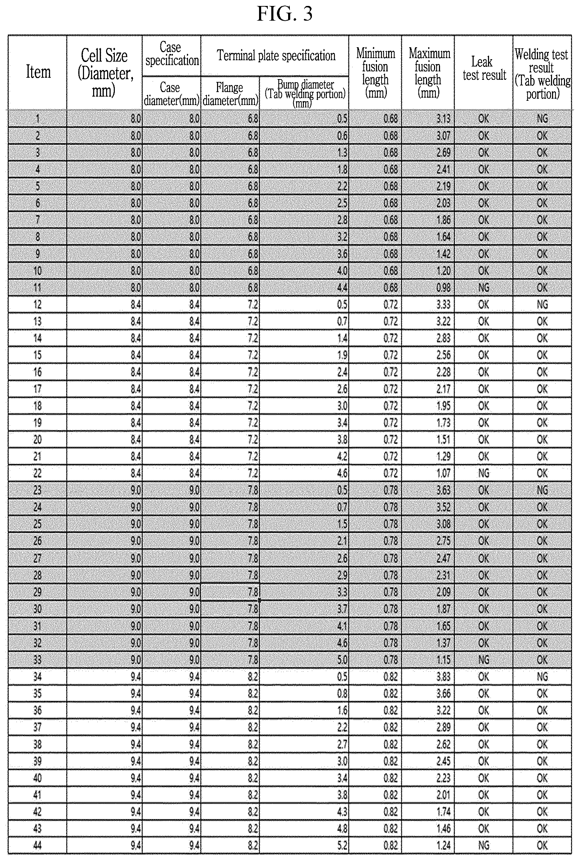

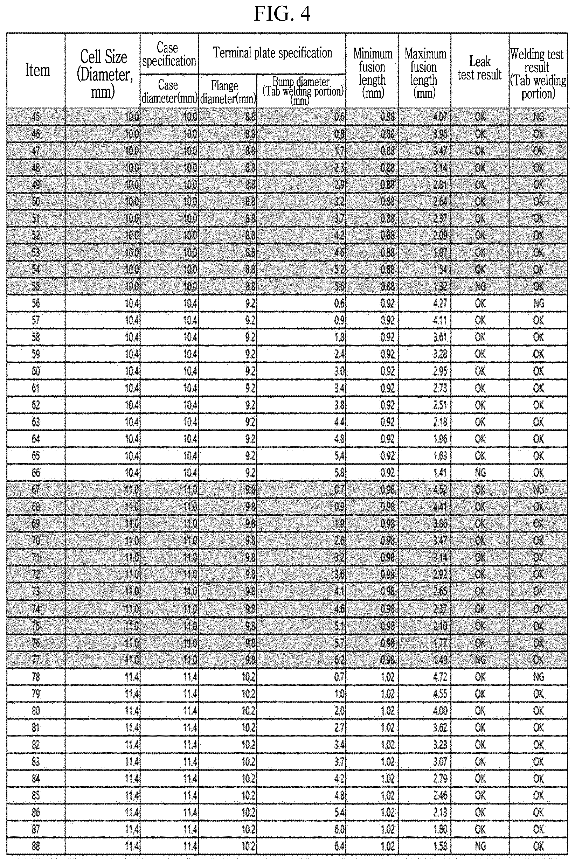

Herein, some experimental examples confirming the effect of the rechargeable battery 1000 according to the embodiment described above are described with reference to FIGS. 3 and 4.

FIG. 3 is a first table showing experimental examples illustrating an effect of a rechargeable battery according to an embodiment. FIG. 4 is a second table showing experimental examples illustrating an effect of a rechargeable battery according to an embodiment.

In FIGS. 3 and 4, a CELL SIZE may represent a diameter that is the exterior diameter of the rechargeable battery of the coin type, a Case specification may represent a specification of the case of the rechargeable battery, and a TERMINAL PLATE specification may represent a specification of the terminal plate, the maximum fusion length may represent the maximum length in which the flange part of the terminal plate overlaps the cap plate in the vertical direction from the center of the terminal plate to the border of the terminal plate, and the minimum fusion length may represent the minimum length in which the flange part of the terminal plate overlaps the cap plate in the vertical direction from the center of the terminal plate to the border of the terminal plate.

Also, in FIGS. 3 and 4, a Case diameter may refer to the first diameter D1 of the case 200 shown in FIG. 2, a Flange diameter may refer to the second diameter D2 of the flange part 410 of the terminal plate 400 shown in FIG. 2, a Bump diameter may refer to the third diameter D3 of the protruded part 420 of the terminal plate 400 shown in FIG. 2, the maximum fusion length may refer to the maximum fusion length D4 in which the thermal fusion layer 500 is positioned between the terminal plate 400 and the cap plate 300 illustrated in FIG. 2, the minimum fusion length may refer to the minimum fusion length in which the thermal fusion layer 500 is positioned between the terminal plate 400 and the cap plate 300 illustrated in FIG. 2, a Leak test result may refer to a result confirming bonding reliability between the flange part 410 and the cap plate 300 by the thermal fusion layer 500 shown in FIG. 2, a Welding test result may refer to a result confirming welding reliability between the second electrode tab 150 and the protruded part 420 shown in FIG. 2.

Referring to FIGS. 3 and 4, Experimental Example 1 to Experimental Example 88 (1 to 88) were performed to confirm the effect depending on a numerical limitation of the rechargeable battery according to the embodiment described above.

In Experimental Example 1 to Experimental Example 11, the first diameter (the Case Diameter) of the case is 8 mm, the second diameter (the Flange Diameter) of the flange part of the terminal plate is 6.8 mm, and the third diameter (the Bump diameter) of the protruded part of the terminal plate is 0.5 mm to 4.4 mm, and in this case, the maximum fusion length is 3.13 mm to 0.98 mm.

In Experimental Example 1, the third diameter (the Bump diameter) of the protruded part of the terminal plate is 0.5 mm in which the third diameter of the protruded part/the second diameter of the flange part is less than 2/25, and, in this case, the maximum fusion length in which the thermal fusion layer is located is 3.13mm, so there was no abnormality in the bonding reliability confirmation result (the Leak test result) (OK), but the third diameter of the protruded part to which the second electrode tap is welded is 0.5 mm, so that the welding reliability confirmation result (the Welding test Result) was abnormal (NG).

In Experimental Example 2 to Experimental Example 10, the third diameter (the Bump diameter) of the protruded part of the terminal plate is 0.6 mm to 4.0 mm in which the third diameter of the protruded part/the second diameter of the flange part is substantially 2/25 to 3/5, and, in this case, the maximum fusion length in which the thermal fusion layer is located is 3.07 mm to 1.20 mm which satisfies Equation 2 below, and simultaneously the third diameter of the protruded part to which the second electrode tap is welded is 0.6 mm to 4.0 mm, so that there was no abnormality in the bonding reliability confirmation result (the Leak test result) and the welding reliability confirmation result (the Welding test Result) (OK).

[Equation2]

$$\text{Maximum fusion length} = (\text{Second diameter of flanged part} - (\text{third diameter of protruded part} *1.1))/2$$

In Experimental Example 11, the third diameter (the Bump diameter) of the protruded part of the terminal plate is 4.4 mm in which the third diameter of the protruded part/the second diameter of the flange part exceeds 3.5, and, in this case, the third diameter of the protruded part to which the second electrode tap is welded is 4.4 mm, so that there was no abnormality in the welding reliability confirmation result (the Welding test Result) (OK), but the maximum fusion length in which the thermal fusion layer is located is 0.98 mm, so that an abnormality occurred in the bonding reliability confirmation result (the Leak test result) (NG).

As confirmed in Experimental Example 2 to Experimental Example 10, when the ratio of the third diameter of the protruded part to the second diameter of the flange part is 2/25 to 3/5, the effect that the second electrode tab is firmly bonded to the protruded part and concurrently (e.g., simultaneously) the flange part and the cap plate are firmly bonded by the thermal fusion layer was confirmed.

In addition, as confirmed in Experimental Example 1 and Experimental Example 11, when the ratio of the third diameter of the protruded part to the second diameter of the flange part is less than 2/25 or more than 3/5, it was confirmed that the second electrode tab is not firmly attached to the protruded part or the flange part and the cap plate were not firmly bonded by the thermal fusion layer.

In other words, as the result confirmed through Experimental Example 1 to Experimental Example 11 it was confirmed that the numerical limitation that the ratio of the third diameter of the protruded part to the second diameter of the flange part is 2/25 to 3/5 is a threshold range realizing the effect that the second electrode tab is firmly bonded to the protruded part and simultaneously the flange part and the cap plate are firmly bonded by the thermal fusion layer.

Also, as confirmed in Experimental Example 12 to Experimental Example 88, when the ratio of the third diameter of the protruded part to the second diameter of the flange part was 2/25 to 3/5, the effect was confirmed that the second electrode tab is firmly bonded to the protruded part and simultaneously the flange part and the cap plate are firmly bonded by the thermal fusion layer, and when the ratio of the third diameter of the protruded part to the second diameter of the flange part is less than 2/25 or more than 3/5, it was confirmed that the second electrode tab is not firmly bonded to the protruded part or the flange part and the cap plate are not firmly bonded by the thermal fusion layer.

In other words, as the result confirmed through Experimental Example 12 to Experimental Example 88, it was confirmed that the numerical limitation in which the ratio of the third diameter of the protruded part to the second diameter of the flange part is 2/25 to 3/5 is a threshold range that realizes the effect that the second electrode tab is firmly bonded to the protruded part and simultaneously the flange part and the cap plate are firmly bonded by the thermal fusion layer.

Although an exemplary embodiment of the present invention has been described in detail, the scope of the present invention is not limited by the embodiment. Various changes and modifications using the basic concept of the present invention defined in the accompanying claims by those skilled in the art shall be construed to belong to the scope of the present invention.

<Description of symbols>

Electrode assembly 100, Case 200, Cap plate 300, Terminal plate 400, Flange part 410, Protruded part 420

Claims

1. A rechargeable battery comprising:

an electrode assembly including a first electrode, a second electrode, and a separator between the first electrode and the second electrode;
a case connected to the first electrode to house the electrode assembly, and including an opening to expose the electrode assembly;
a cap plate coupled with the case to cover an outer region of the opening and including a through-hole to expose a center region of the opening; and
a terminal plate connected to the second electrode to be insulated from and bonded to the cap plate, and including a flange part covering the through-hole and a protruded part penetrating the through-hole from the flange part,

wherein a ratio of a diameter of the protruded part to a diameter of the flange part is 2/25 to 3/5.

2. The rechargeable battery of claim 1, further comprising:
a thermal fusion layer between the cap plate and the flange part and insulatedly bonding the cap plate and the flange part.

3. The rechargeable battery of claim 2, wherein:
the thermal fusion layer is melted at a predetermined temperature.

4. The rechargeable battery of claim 1, wherein:

the flange part is arranged on the cap plate, and
the protruded part is connected to the second electrode through the through-hole from the flange part.

5. The rechargeable battery of claim 4, wherein:
the electrode assembly further includes:
a first electrode tab extending from the first electrode and welded to the case; and a second electrode tab extending from the second electrode and welded to the protruded part of the terminal plate.

6. The rechargeable battery of claim 1, wherein:
the flange part has a wider area than the protruded part.

7. The rechargeable battery of claim 1, wherein:
the flange part has a thinner thickness than the protruded part.

8. The rechargeable battery of claim 1, wherein:
the flange part and the protruded part are integrally formed.

9. The rechargeable battery of claim 1, wherein:

the case and the cap plate have a same polarity as the first electrode, and
the terminal plate has a same polarity as the second electrode.

10. The rechargeable battery of claim 1, wherein:
the diameter of the flange part is smaller than a diameter of the case.

11. The rechargeable battery of claim 1, wherein:
the ratio of the diameter of the protruded part to the diameter of the flange part is 1/10 to 3/5.

12. The rechargeable battery of claim 1, wherein:
the ratio of the diameter of the protruded part to the diameter of the flange part is 1/10 to 1/2.

13. The rechargeable battery of claim 1, wherein:
the ratio of the diameter of the protruded part to the diameter of the flange part is 1/10 to 1/3.

14. The rechargeable battery of claim 1, wherein:
the rechargeable battery includes a coin-type cell or a button-type cell.

15. The rechargeable battery of claim 14, wherein:
a ratio of a height to a diameter of the coin-type cell or the button-type cell (height/diameter) is 1 or less.

16. A rechargeable battery, comprising:

an electrode assembly including a first electrode, a second electrode, and a separator between the first electrode and the second electrode;
a case connected to the first electrode to house the electrode assembly, and including an opening to expose the electrode assembly;
a cap plate coupled with the case to cover an outer region of the opening and including a through-hole to expose a center region of the opening; and

a terminal plate connected to the second electrode to be insulated from and bonded to the cap plate, and including a flange part covering the through-hole and a protruded part penetrating the through-hole from the flange part,

wherein a ratio of a diameter of the protruded part to a diameter of the flange part is 2/25 or more.

17. The rechargeable battery of claim 16, wherein:
the ratio of the diameter of the protruded part to the diameter of the flange part is 3/5 or less.

18. The rechargeable battery of claim 16, wherein:
the ratio of the diameter of the protruded part to the diameter of the flange part is 1/2 or less.

19. The rechargeable battery of claim 16, wherein:
the ratio of the diameter of the protruded part to the diameter of the flange part is 1/3 or less.

FIG. 1

1000

## FIG. 2

## FIG. 3

| Item | Cell Size (Diameter, mm) | Case specification | Terminal plate specification | | Minimum fusion length (mm) | Maximum fusion length (mm) | Leak test result | Welding test result (Tab welding portion) |
|---|---|---|---|---|---|---|---|---|
| | | Case diameter(mm) | Flange diameter(mm) | Bump diameter (Tab welding portion) (mm) | | | | |
| 1 | 8.0 | 8.0 | 6.8 | 0.5 | 0.68 | 3.13 | OK | NG |
| 2 | 8.0 | 8.0 | 6.8 | 0.6 | 0.68 | 3.07 | OK | OK |
| 3 | 8.0 | 8.0 | 6.8 | 1.3 | 0.68 | 2.69 | OK | OK |
| 4 | 8.0 | 8.0 | 6.8 | 1.8 | 0.68 | 2.41 | OK | OK |
| 5 | 8.0 | 8.0 | 6.8 | 2.2 | 0.68 | 2.19 | OK | OK |
| 6 | 8.0 | 8.0 | 6.8 | 2.5 | 0.68 | 2.03 | OK | OK |
| 7 | 8.0 | 8.0 | 6.8 | 2.8 | 0.68 | 1.86 | OK | OK |
| 8 | 8.0 | 8.0 | 6.8 | 3.2 | 0.68 | 1.64 | OK | OK |
| 9 | 8.0 | 8.0 | 6.8 | 3.6 | 0.68 | 1.42 | OK | OK |
| 10 | 8.0 | 8.0 | 6.8 | 4.0 | 0.68 | 1.20 | OK | OK |
| 11 | 8.0 | 8.0 | 6.8 | 4.4 | 0.68 | 0.98 | NG | OK |
| 12 | 8.4 | 8.4 | 7.2 | 0.5 | 0.72 | 3.33 | OK | NG |
| 13 | 8.4 | 8.4 | 7.2 | 0.7 | 0.72 | 3.22 | OK | OK |
| 14 | 8.4 | 8.4 | 7.2 | 1.4 | 0.72 | 2.83 | OK | OK |
| 15 | 8.4 | 8.4 | 7.2 | 1.9 | 0.72 | 2.56 | OK | OK |
| 16 | 8.4 | 8.4 | 7.2 | 2.4 | 0.72 | 2.28 | OK | OK |
| 17 | 8.4 | 8.4 | 7.2 | 2.6 | 0.72 | 2.17 | OK | OK |
| 18 | 8.4 | 8.4 | 7.2 | 3.0 | 0.72 | 1.95 | OK | OK |
| 19 | 8.4 | 8.4 | 7.2 | 3.4 | 0.72 | 1.73 | OK | OK |
| 20 | 8.4 | 8.4 | 7.2 | 3.8 | 0.72 | 1.51 | OK | OK |
| 21 | 8.4 | 8.4 | 7.2 | 4.2 | 0.72 | 1.29 | OK | OK |
| 22 | 8.4 | 8.4 | 7.2 | 4.6 | 0.72 | 1.07 | NG | OK |
| 23 | 9.0 | 9.0 | 7.8 | 0.5 | 0.78 | 3.63 | OK | NG |
| 24 | 9.0 | 9.0 | 7.8 | 0.7 | 0.78 | 3.52 | OK | OK |
| 25 | 9.0 | 9.0 | 7.8 | 1.5 | 0.78 | 3.08 | OK | OK |
| 26 | 9.0 | 9.0 | 7.8 | 2.1 | 0.78 | 2.75 | OK | OK |
| 27 | 9.0 | 9.0 | 7.8 | 2.6 | 0.78 | 2.47 | OK | OK |
| 28 | 9.0 | 9.0 | 7.8 | 2.9 | 0.78 | 2.31 | OK | OK |
| 29 | 9.0 | 9.0 | 7.8 | 3.3 | 0.78 | 2.09 | OK | OK |
| 30 | 9.0 | 9.0 | 7.8 | 3.7 | 0.78 | 1.87 | OK | OK |
| 31 | 9.0 | 9.0 | 7.8 | 4.1 | 0.78 | 1.65 | OK | OK |
| 32 | 9.0 | 9.0 | 7.8 | 4.6 | 0.78 | 1.37 | OK | OK |
| 33 | 9.0 | 9.0 | 7.8 | 5.0 | 0.78 | 1.15 | NG | OK |
| 34 | 9.4 | 9.4 | 8.2 | 0.5 | 0.82 | 3.83 | OK | NG |
| 35 | 9.4 | 9.4 | 8.2 | 0.8 | 0.82 | 3.66 | OK | OK |
| 36 | 9.4 | 9.4 | 8.2 | 1.6 | 0.82 | 3.22 | OK | OK |
| 37 | 9.4 | 9.4 | 8.2 | 2.2 | 0.82 | 2.89 | OK | OK |
| 38 | 9.4 | 9.4 | 8.2 | 2.7 | 0.82 | 2.62 | OK | OK |
| 39 | 9.4 | 9.4 | 8.2 | 3.0 | 0.82 | 2.45 | OK | OK |
| 40 | 9.4 | 9.4 | 8.2 | 3.4 | 0.82 | 2.23 | OK | OK |
| 41 | 9.4 | 9.4 | 8.2 | 3.8 | 0.82 | 2.01 | OK | OK |
| 42 | 9.4 | 9.4 | 8.2 | 4.3 | 0.82 | 1.74 | OK | OK |
| 43 | 9.4 | 9.4 | 8.2 | 4.8 | 0.82 | 1.46 | OK | OK |
| 44 | 9.4 | 9.4 | 8.2 | 5.2 | 0.82 | 1.24 | NG | OK |

## FIG. 4

| Item | Cell Size (Diameter, mm) | Case specification | Terminal plate specification | | Minimum fusion length (mm) | Maximum fusion length (mm) | Leak test result | Welding test result (Tab welding portion) |
|---|---|---|---|---|---|---|---|---|
| | | Case diameter(mm) | Flange diameter(mm) | Bump diameter (Tab welding portion) (mm) | | | | |
| 45 | 10.0 | 10.0 | 8.8 | 0.6 | 0.88 | 4.07 | OK | NG |
| 46 | 10.0 | 10.0 | 8.8 | 0.8 | 0.88 | 3.96 | OK | OK |
| 47 | 10.0 | 10.0 | 8.8 | 1.7 | 0.88 | 3.47 | OK | OK |
| 48 | 10.0 | 10.0 | 8.8 | 2.3 | 0.88 | 3.14 | OK | OK |
| 49 | 10.0 | 10.0 | 8.8 | 2.9 | 0.88 | 2.81 | OK | OK |
| 50 | 10.0 | 10.0 | 8.8 | 3.2 | 0.88 | 2.64 | OK | OK |
| 51 | 10.0 | 10.0 | 8.8 | 3.7 | 0.88 | 2.37 | OK | OK |
| 52 | 10.0 | 10.0 | 8.8 | 4.2 | 0.88 | 2.09 | OK | OK |
| 53 | 10.0 | 10.0 | 8.8 | 4.6 | 0.88 | 1.87 | OK | OK |
| 54 | 10.0 | 10.0 | 8.8 | 5.2 | 0.88 | 1.54 | OK | OK |
| 55 | 10.0 | 10.0 | 8.8 | 5.6 | 0.88 | 1.32 | NG | OK |
| 56 | 10.4 | 10.4 | 9.2 | 0.6 | 0.92 | 4.27 | OK | NG |
| 57 | 10.4 | 10.4 | 9.2 | 0.9 | 0.92 | 4.11 | OK | OK |
| 58 | 10.4 | 10.4 | 9.2 | 1.8 | 0.92 | 3.61 | OK | OK |
| 59 | 10.4 | 10.4 | 9.2 | 2.4 | 0.92 | 3.28 | OK | OK |
| 60 | 10.4 | 10.4 | 9.2 | 3.0 | 0.92 | 2.95 | OK | OK |
| 61 | 10.4 | 10.4 | 9.2 | 3.4 | 0.92 | 2.73 | OK | OK |
| 62 | 10.4 | 10.4 | 9.2 | 3.8 | 0.92 | 2.51 | OK | OK |
| 63 | 10.4 | 10.4 | 9.2 | 4.4 | 0.92 | 2.18 | OK | OK |
| 64 | 10.4 | 10.4 | 9.2 | 4.8 | 0.92 | 1.96 | OK | OK |
| 65 | 10.4 | 10.4 | 9.2 | 5.4 | 0.92 | 1.63 | OK | OK |
| 66 | 10.4 | 10.4 | 9.2 | 5.8 | 0.92 | 1.41 | NG | OK |
| 67 | 11.0 | 11.0 | 9.8 | 0.7 | 0.98 | 4.52 | OK | NG |
| 68 | 11.0 | 11.0 | 9.8 | 0.9 | 0.98 | 4.41 | OK | OK |
| 69 | 11.0 | 11.0 | 9.8 | 1.9 | 0.98 | 3.86 | OK | OK |
| 70 | 11.0 | 11.0 | 9.8 | 2.6 | 0.98 | 3.47 | OK | OK |
| 71 | 11.0 | 11.0 | 9.8 | 3.2 | 0.98 | 3.14 | OK | OK |
| 72 | 11.0 | 11.0 | 9.8 | 3.6 | 0.98 | 2.92 | OK | OK |
| 73 | 11.0 | 11.0 | 9.8 | 4.1 | 0.98 | 2.65 | OK | OK |
| 74 | 11.0 | 11.0 | 9.8 | 4.6 | 0.98 | 2.37 | OK | OK |
| 75 | 11.0 | 11.0 | 9.8 | 5.1 | 0.98 | 2.10 | OK | OK |
| 76 | 11.0 | 11.0 | 9.8 | 5.7 | 0.98 | 1.77 | OK | OK |
| 77 | 11.0 | 11.0 | 9.8 | 6.2 | 0.98 | 1.49 | NG | OK |
| 78 | 11.4 | 11.4 | 10.2 | 0.7 | 1.02 | 4.72 | OK | NG |
| 79 | 11.4 | 11.4 | 10.2 | 1.0 | 1.02 | 4.55 | OK | OK |
| 80 | 11.4 | 11.4 | 10.2 | 2.0 | 1.02 | 4.00 | OK | OK |
| 81 | 11.4 | 11.4 | 10.2 | 2.7 | 1.02 | 3.62 | OK | OK |
| 82 | 11.4 | 11.4 | 10.2 | 3.4 | 1.02 | 3.23 | OK | OK |
| 83 | 11.4 | 11.4 | 10.2 | 3.7 | 1.02 | 3.07 | OK | OK |
| 84 | 11.4 | 11.4 | 10.2 | 4.2 | 1.02 | 2.79 | OK | OK |
| 85 | 11.4 | 11.4 | 10.2 | 4.8 | 1.02 | 2.46 | OK | OK |
| 86 | 11.4 | 11.4 | 10.2 | 5.4 | 1.02 | 2.13 | OK | OK |
| 87 | 11.4 | 11.4 | 10.2 | 6.0 | 1.02 | 1.80 | OK | OK |
| 88 | 11.4 | 11.4 | 10.2 | 6.4 | 1.02 | 1.58 | NG | OK |

<div align="center">**INTERNATIONAL SEARCH REPORT**</div>

| International application No. |
|---|
| **PCT/KR2021/008621** |

| **A.** | **CLASSIFICATION OF SUBJECT MATTER** |
|---|---|

**H01M 50/153**(2021.01)i; **H01M 50/147**(2021.01)i; **H01M 50/543**(2021.01)i; **H01M 50/172**(2021.01)i; **H01M 50/528**(2021.01)i; **H01M 10/04**(2006.01)i; **H01M 50/581**(2021.01)i

According to International Patent Classification (IPC) or to both national classification and IPC

| **B.** | **FIELDS SEARCHED** |
|---|---|

Minimum documentation searched (classification system followed by classification symbols)

H01M 50/153(2021.01); H01M 2/02(2006.01); H01M 2/04(2006.01); H01M 2/10(2006.01); H01M 2/12(2006.01); H01M 50/572(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 돌출(protrusion), 플랜지(flange), 캡플레이트(cap plate), 단자 플레이트(terminal plate), 비율(ratio), 직경(diameter)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | KR 10-2015-0098418 A (SAMSUNG SDI CO., LTD.) 28 August 2015 (2015-08-28)<br>See paragraphs [0051]-[0058] and figures 1-3. | 1-19 |
| A | KR 10-2011-0072811 A (SAMSUNG SDI CO., LTD.) 29 June 2011 (2011-06-29)<br>See claim 4 and figure 3. | 1-19 |
| A | JP 2004-335265 A (SONY CORP.) 25 November 2004 (2004-11-25)<br>See claim 1 and figure 1. | 1-19 |
| A | WO 2020-009206 A1 (MAXELL HOLDINGS, LTD. et al.) 09 January 2020 (2020-01-09)<br>See claim 1 and figure 1. | 1-19 |
| A | KR 10-0731414 B1 (SAMSUNG SDI CO., LTD.) 21 June 2007 (2007-06-21)<br>See claim 1 and figure 2a. | 1-19 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 October 2021** | **14 October 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

International application No.

**PCT/KR2021/008621**

| Patent document cited in search report | | | Publication date (day/month/year) | Patent family member(s) | | | Publication date (day/month/year) |
|---|---|---|---|---|---|---|---|
| KR | 10-2015-0098418 | A | 28 August 2015 | KR | 10-2210891 | B1 | 02 February 2021 |
| | | | | US | 2015-0236331 | A1 | 20 August 2015 |
| | | | | US | 9627662 | B2 | 18 April 2017 |
| KR | 10-2011-0072811 | A | 29 June 2011 | CN | 102110790 | A | 29 June 2011 |
| | | | | CN | 102110790 | B | 13 August 2014 |
| | | | | KR | 10-1106403 | B1 | 17 January 2012 |
| | | | | US | 2011-0151294 | A1 | 23 June 2011 |
| | | | | US | 8785017 | B2 | 22 July 2014 |
| JP | 2004-335265 | A | 25 November 2004 | CN | 1551390 | A | 01 December 2004 |
| | | | | CN | 1551390 | C | 20 September 2006 |
| | | | | DE | 602004019853 | D1 | 23 April 2009 |
| | | | | EP | 1505668 | A2 | 09 February 2005 |
| | | | | EP | 1505668 | A3 | 28 November 2007 |
| | | | | EP | 1505668 | B1 | 11 March 2009 |
| | | | | JP | 3901122 | B2 | 04 April 2007 |
| | | | | US | 2004-0221446 | A1 | 11 November 2004 |
| | | | | US | 7314492 | B2 | 01 January 2008 |
| WO | 2020-009206 | A1 | 09 January 2020 | CN | 112335101 | A | 05 February 2021 |
| | | | | EP | 3800685 | A1 | 07 April 2021 |
| | | | | WO | 2020-009206 | A1 | 09 January 2020 |
| KR | 10-0731414 | B1 | 21 June 2007 | KR | 10-2007-0034221 | A | 28 March 2007 |

Form PCT/ISA/210 (patent family annex) (July 2019)